# EUROPÄISCHE PATENTSCHRIFT

(11) **EP 1 844 251 B1**
(45) Veröffentlichungstag und Bekanntmachung des Hinweises auf die Patenterteilung: **06.11.2013**
(21) Anmeldenummer: 06706526.8
(22) Anmeldetag: 01.02.2006
(51) Int. Cl.: F16H 59/68, F16H 61/02, F16H 61/04

(54) **VERFAHREN ZUR STEUERUNG EINES AUTOMATISCHEN GETRIEBES EINES FAHRZEUGES ZUM REDUZIEREN VON PENDELSCHALTEN**
METHOD FOR CONTROLLING AN AUTOMATIC VEHICLE TRANSMISSION IN ORDER TO REDUCE BACK-AND-FORTH SHIFTING
PROCEDE POUR COMMANDER UNE BOITE DE VITESSE AUTOMATIQUE DANS UN VEHICULE AFIN DE REDUIRE LE NOMBRE DE CHANGEMENTS DE RAPPORTS

(30) Priorität: 05.02.2005 DE 102005005379
(43) Veröffentlichungstag der Anmeldung: 17.10.2007
(73) Patentinhaber: ZF FRIEDRICHSHAFEN Aktiengesellschaft, 88038 Friedrichshafen (DE)
(72) Erfinder: SAUTER, Ingo, 88074 Meckenbeuren (DE); TEGEN, Achim, 53721 Siegburg (DE); WÜRTHNER, Maik, 88048 Friedrichshafen (DE); WOLFGANG, Wemer, 88213 Ravensburg (DE)
(86) Internationale Anmeldenummer: PCT/EP2006/000834
(87) Internationale Veröffentlichungsnummer: WO 2006/082026

(56) Entgegenhaltungen:
- EP-A- 0 798 496
- GB-A- 2 012 892
- US-A- 5 624 351
- US-A- 5 643 133

## Beschreibung

Die Erfindung betrifft ein Verfahren zur Steuerung eines automatischen Schaltgebtriebes eines Fahrzeuges gemäß dem Oberbegriff des Patentanspruchs 1.

Es ist bekannt, dass der Schaltpunkt zum Wechseln von einer Getriebegangstufe zu einer anderen Getriebegangstufe eines Automatgetriebes eines Fahrzeuges durch unterschiedliche Maßnahmen beeinflusst werden kann. Dazu zählen beispielsweise Wählhebelstellung, Programmschalter, Kick-Down-Schalter, Getriebeöltemperatur, Getriebeeingangsdrehzahl und/oder Brems-Signal. In der Praxis kommt es immer wieder vor, dass ein Schalten von einer Gangstufe in eine höhere Gangstufe oder eine niedrigere Gangstufe in relativ kurzen Zeitabständen erfolgt. In diesen Fällen sind jeweils die steuerungstechnischen Kriterien für ein Hochschalten oder Rückschalten des Getriebes erfüllt. Ein häufiges Hin- und Her-Schalten zwischen zwei Gangstufen wird als Pendelschalten bezeichnet.

Solche Pendelschaltungen können z.B. bei einer Bergfahrt auftreten. Ist bei konstanter Laststellung die Zugkraft des Motors nach einer Hochschaltung geringe als die Summe der Fahrwiderstandskräfte, so nimmt die Beschleunigung des Fahrzeuges ab, bis schließlich die absolute Fahrzeuggeschwindigkeit sinkt. Ist ein Grenzwert erreicht, bei dem eine Rückschaltung vorgesehen wird, wird das Getriebe veranlasst in eine niedrigere Gangstufe zurückzuschalten. Bei dieser niedrigeren Gangstufe ist die Zugkraft größer als die Fahrwiderstandskräfte, so dass das Fahrzeug erneut beschleunigen kann. Wird eine Beschleunigung vom Fahrer gewünscht, so erfolgt sie so lange, bis erneut ein Grenzwert für das Hochschalten erreicht ist. Ein solches Pendeln zwischen den Getriebegängen wird bei automatischen Getrieben als unangenehm empfunden, da während des Schaltvorganges stets eine Kupplung geöffnet und damit die Zugkraft unterbrochen wird.

Ein Verfahren dieser Art ist bereits aus der Druckschrift EP 0798496 bekannt. Vor diesem Hintergrund liegt der Erfindung die Aufgabe zugrunde, bei einem automatischen Getriebe eines Fahrzeugs den Schaltpunkt zur Auswahl des jeweils günstigsten zu schaltenden Ganges so zu steuern, dass ein Pendelschalten vermieden oder zumindest reduziert wird.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass ein häufiges Schalten zwischen zwei Gangstufen verringert werden kann, wenn der Zeitpunkt für eine Entscheidung zum Schalten verzögert erfolgt. Wird unmittelbar nach Uberschreiten eines Grenzwertes, welcher ein Schalten von einer Gangstufe in eine andere Gangstufe verursachen würde, ein Zähler gestartet, so kann vorgesehen werden, dass ein Gangstufenwechsel erst erfolgt, wenn der Zählerwert des Zählers den Wert Null erreicht hat.

Demnach geht die Erfindung aus von einem Verfahren zur Steuerung eines automatischen Getriebes eines Fahrzeuges mit Kupplungen, die durch eine elektronische Steuerungseinneit gesteuert werden, wobei das Verfahren die folgenden Schritte aufweist:
- Erfassen einer Getriebedrehzahl bei einer Anfangsgangstufe,
- Schalten von der Anfangsgangstufe in eine Zielgangstufe, falls eine erste Getriebeschaltdrehzahl erreicht ist, und
- Erfassen einer Getriebezieldrehzahl der Zielgangstufe.

Zudem ist vorgesehen, dass das Verfahren die weiteren Schritte aufweist:
- Ermitteln eines Betrages einer Getriebedrehzahldifferenz aus Getriebeziel-Drehzahl und einer zweiten Getriebeschaltdrehzahl, welche einen Betrag zwischen der ersten Getriebeschaltdrehzahl und der Getriebezieldrehzahl aufweist,
- Bestimmen eines Startzählerwertes eines Zählers in Abhängigkeit vom Betrag der Getriebedrehzahldifferenz;
- Zähler vom Startzählerwert beginnend in Abhängigkeit von der Zeit zählen lassen,
- Schalten von der Zielgangstufe in Richtung zur Anfangsgangstufe, wenn der Zählerwert des Zählers den Wert Null erreicht hat.

Außerdem kann bevorzugt vorgesehen sein, dass die Zielgangstufe eine höhere Gangstufe als die Anfangsgangstufe ist, und die zweite Getriebeschaltdrehzahl eine Getriebeschaltdrehzahl für ein Rückschalten in eine niedrigere Gangstufe in Richtung zur Anfangsgangstufe ist. Damit wird nach dem Hochschalten in eine höhere Gangstufe ein vorzeitiges Rückschalten in eine niedrigere Gangstufe verhindert.

Des weiteren kann bevorzugt vorgesehen sein, dass der Zählerwert vom Startzählerwert beginnend abnimmt, wenn das Fahrzeug so beschleunigt wird, dass ein vorbestimmter Beschleunigungsbetrag unterschritten wird. Dies ist vorteilhaft, da somit der Schaltpunkt bis zum Rückschalten in eine niedrigere Gangstufe nur kurz verzögert wird. Ein solches Dekrementieren des Zählerwertes verhindert somit, dass das Fahrzeug zu lange mit einer zu hohen Gangstufe betrieben wird.

Zudem kann vorteilhaft vorgesehen sein, dass der Zählerwert von einem schon reduzierten Startzählerwert beginnend zunimmt, wenn das Fahrzeug so beschleunigt wird, dass ein vorbestimmter Beschleunigungsbetrag überschritten wird. Dies ist vorteilhaft, weil dadurch berücksichtigt wird, dass sich bei genügend hoher Beschleunigung die Wahrscheinlichkeit verringert, dass in eine niedrigere Gangstufe zurückgeschaltet werden muss. Durch die Zunahme des Zählerwertes (Inkrementieren) wird der Zeitpunkt, bei dem der Zählerwert des Zählers den Wert Null erreicht, weiter verzögert. Somit wird die Wahrscheinlichkeit für ein Pendelschalten reduziert.

Außerdem kann vorgesehen sein, dass der Startzählerwert auf einen relativ hohen Startzählerwert gesetzt wird, wenn der Betrag der Getriebedrehzahldifferenz einen relativ niedrigen Wert aufweist. Dies ist vorteilhaft, da bei einem niedrigen Wert der Getriebedrehzahldifferenz ein Rückschalten länger verhindert werden sollte, um ein Pendelschalten zu vermeiden. Bei einem hohen Startzählerwert dauert es relativ lange, bis der Zählerwert den Wert Null erreicht hat und somit ein Rückschalten ausgelöst wird.

Auch kann bevorzugt vorgesehen sein, dass der Startzählerwert auf einen relativ niedrigen Startzählerwert gesetzt wird, wenn der Betrag der Getriebedrehzahldifferenz einen relativ hohen Wert aufweist. Dies ist vorteilhaft, da bei einer hohen Getriebedrehzahldifferenz ein Rückschalten nur kurzzeitig verzögert werden sollte. Weist der Startzählerwert einen niedrigen Wert auf, erreicht der Zählerwert des Zählers relativ rasch den Wert Null, so dass ein Rückschalten ausgelöst wird.

In einer weiteren Variante kann bevorzugt vorgesehen sein, dass die Zielgangstufe eine niedrigere Gangstufe als die Anfangsgangstufe ist, und die zweite Getriebeschaltdrehzahl eine Getriebeschaltdrehzahl für ein Hochschalten in eine höhere Gangstufe in Richtung zur Anfangsgangstufe ist. Damit wird nach einer Rückschaltung ein zu frühes Hochschalten verhindert.

Ferner kann bevorzugt vorgesehen sein, dass der Zählerwert von einem schon reduzierten Startzählerwert beginnend zunimmt, wenn das Fahrzeug so verzögert wird, dass ein vorbestimmter Verzögerungsbetrag überschritten wird. Dies ist vorteilhaft, da bei einer zunehmenden Verzögerung die Getriebedrehzahl abnimmt, so dass sich die Wahrscheinlichkeit für eine Hochschaltung verringert. Ein zunehmender Zählerwert verzögert daher das Erreichen des Schaltpunktes.

Zudem kann vorteilhaft vorgesehen sein, dass der Zählerwert vom Startzählerwert beginnend abnimmt, wenn das Fahrzeug so verzögert wird, dass ein vorbestimmter Verzögerungsbetrag unterschritten wird. Dies ist günstig, da bei abnehmender Verzögerung die Getriebedrehzahl zunimmt und eine Hochschaltung in eine höhere Gangstufe möglichst rasch erfolgen sollte. Mit abnehmendem Zählerwert wird somit schneller der Wert Null erreicht, um das Hochschalten auszulösen.

Weiter kann bevorzugt vorgesehen sein, dass der Startzähferwert auf einen relativ hohen Startzählerwert gesetzt wird, wenn der Betrag der Getriebedrehzahldifferenz einen relativ niedrigen Wert aufweist. Ist die Getriebezieldrehzahl nur geringfügig oberhalb der zweiten Getriebeschaltdrehzahl, so wird durch den relativ hohen Startzählerwert verhindert, dass eine schnelle Hochschaltung erfolgt.

Des Weiteren kann vorgesehen sein, dass der Startzählerwert auf einen relativ niedrigen Startzählerwert gesetzt wird, wenn der Betrag der Getriebedrehzahldifferenz einen relativ hohen Wert aufweist. Damit kann der Zählerwert relativ rasch den Wert Null erreichen, so dass ein Hochschalten nur kurz verzögert wird.

Außerdem kann gemäß der Erfindung mit Vorteil vorgesehen sein, dass zur Bestimmung desjenigen Zählerwertinkrements, mit dem der Startzählerwert dekrementiert oder inkrementiert wird, eine Zählerwertkennlinie oder eine Zählerwerttabelle genutzt wird. Mit dieser beispielsweise Zählerwertkennlinie kann ein aktuelles Zählerwertinkrement zum Dekrementieren oder Inkrementieren in Abhängigkeit von der Fahrzeugbeschleunigung oder bevorzugt in Abhängigkeit von der Beschleunigung der Getriebeeingangswellendrehzahl bestimmt und beim Dekrementieren bzw. Inkrementieren genutzt werden.

Die Beschleunigung der Getriebeeingangswellendrehzahl, also der Gradient der Getriebeeingangsdrehzahl, wird vor allem deshalb bevorzugt, weil dieser Wert die Fahrzeugbeschleunigung gewichtet (also multipliziert) mit der aktuellen Gangstufe des Getriebes darstellt. Auf diese Weise kann berücksichtigt werden, dass die mögliche Zugkraft des Antriebsstranges und damit die mögliche Beschleunigung des Fahrzeugs mit niedrigeren Gangstufen zunimmt.

Schließlich ist gemäß der Erfindung vorgesehen, dass die Schaltdrehzahlen für eine mögliche Hochschaltung und eine mögliche Rückschaltung von dem aktuellen Gang ständig und parallel bestimmt werden. Daher wird für jede dieser beiden Betriebsarten (Hochschalten oder Rückschalten) ein separater Zähler zum Dekrementieren bzw. Inkrementieren deren Zählerstände genutzt. Die Auslösung eines konkreten Hoch- oder Rückschaltvorgangs erfolgt erst dann, wenn der zur aktuellen Betriebsart gehörende Zähler den Wert Null erreicht hat. Dadurch können beide Betriebsarten gleichzeitig berechnet werden und die Schaltdrehzahlen können sich sogar überschneiden.

Die Erfindung lässt sich anhand eines Ausführungsbeispiels und einer der Beschreibung beigefügten Zeichnung erläutern.

In dieser zeigt
- Fig. 1: eine schematische Darstellung eines Antriebsmotors und eines automatischen Schaltgetriebes,
- Fig. 2: ein Drehzahldiagramm in Abhängigkeit von der Zeit beim Hochschalten von einer niedrigen Gangstufe in eine höhere Gangstufe gemäß der Erfindung,
- Fig. 3: ein Drehzahldiagramm in Abhängigkeit von der Zeit für ein Rückschalten von einer hohen Gangstufe in eine niedrigere Gangstufe gemäß der Erfindung, und
- Fig. 4: eine schematische Darstellung des Zählers und der ihm zugeführten Signale zur Durchführung des erfindungsgemäßen Verfahrens.

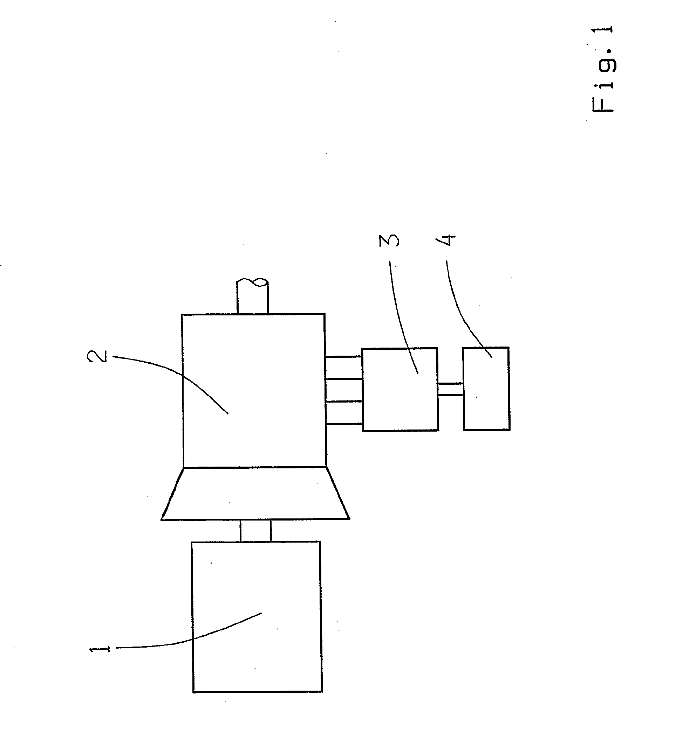

In Fig. 1 ist ein Antriebsmotor 1 eines Fahrzeugantriebsstranges dargestellt, welcher mit einem automatischen Getriebe 2 antriebsgekoppelt ist. Eine elektronische Steuerungseinheit 3 steuert Schaltventile an, mit welchen die Betätigungsstellung von Kupplungen des Getriebes 2 angesteuert werden. Die elektronische Steuerungseinheit 3 ist mit einem Zähler 4 verbunden, welcher dazu vorgesehen ist, das Schalten des Getriebes von einer Gangstufe in eine andere Gangstufe zu beeinflussen. Der Zähler 4 kann Bestandteil der elektronischen Steuerungseinheit 3 sein.

Bevorzugt sind für die beiden Betriebsarten Hochschalten und Rückschalten individuelle Zähler 4 vorhanden, so dass vorteilhaft die jeweiligen Berechnungen für einen möglichen Hochschaltvorgang bzw. einen möglichen Rückschaltvorgang zeitlich weitgehend parallel ablaufen können.

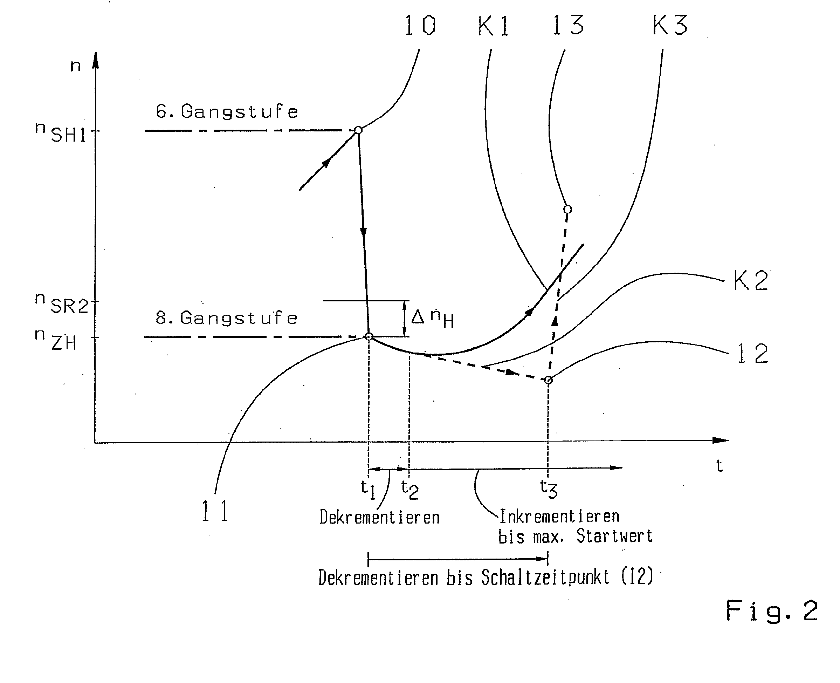

Fig. 2 zeigt ein Drehzahldiagramm in Abhängigkeit von der Zeit, in dem auf der Ordinate die Getriebedrehzahl n und auf der Abszisse die Zeit t eingetragen ist. Steigt an der Getriebeabtriebswelle die Getriebedrehzahl so an, dass eine erste Getriebeschaltdrehzahl n_{SH1} erreicht wird, so veranlasst die elektronische Steuerungseinheit 3 ein Hochschalten in eine höhere Gangstufe (in diesem Beispiel von der 6. Gangstufe in die 8. Gangstufe).

Die Drehzahl verringert sich damit von der Schaltdrehzahl n_{SH1} bei einer niedrigen Gangstufe (siehe in Fig. 2 Punkt 10) auf eine Zieldrehzahl einer höheren Gangstufe (siehe in Fig. 2 Punkt 11 im Zeitpunkt t1). Die Zieldrehzahl n_{ZH} nach dem Hochschalten kann unterhalb der zweiten Getriebeschaltdrehzahl n_{SR2} liegen. Die Getriebedrehzahldifferenz Δn_{H} aus der zweiten Getriebeschaltdrehzahl n_{SR2} und der Getriebezieldrehzahl n_{ZH} bestimmt einen Startzählerwert des Zählers 4. Erreicht die Getriebedrehzahldifferenz Δn_{H} einen hohen Wert, so wird der Startzählerwert auf einen relativ niedrigen Zählerwert gesetzt.

Der Betrag der Getriebedrehzahldifferenz wird ebenso wie der Startzählerwert während des Betriebs des Fahrzeuges ständig ermittelt. Dabei ist dieser Startzählerwert als ein Maximalwert des Zählers 4 definiert, so dass von diesem zu Beginn eines jeden Zählvorgangs ein Zählerwertinkrement nur abgezogen werden kann. Sobald der Startzählerwert unterschritten ist, kann,anschließend der aktuelle Zählerwert wieder bis zum Startzählerwert aufaddiert werden.

Der weitere Verlauf der Drehzahlkurve bestimmt dann, ob beginnend vom Startzählerwert der Zählerwert ständig abnimmt oder nach einer anfänglichen Reduzierung wieder zunimmt. Der Zählerwert nimmt ab dem Zeitpunkt t2 zu (Inkrementieren), wenn das Fahrzeug beschleunigt wird und die Drehzahl ansteigt. In Fig. 2 ist dieser Kurvenanteil mit K1 bezeichnet. Bei abnehmender Beschleunigung und sinkender Geschwindigkeit nimmt der Zählerwert ab (Dekrementieren), so dass nach relativ kurzer Zeit der Zählerwert den Wert Null erreicht hat (Zeiträume t1 bis t2 und t1 bis t3).

Verläuft die Drehzahl bei der höheren Gangstufe prinzipiell nach der Kurve K2, siehe Fig. 2, so wird bei Punkt 12 eine Rückschaltung in eine niedrigere Gangstufe ausgelöst, wenn der Zählerwert den Wert Null erreicht hat (t3). Die Rückschaltung erfolgt dann in Richtung zur Anfangsgangstufe. Von der 8. Gangstufe kann somit in die 7. Gangstufe, siehe Punkt 13 in Fig. 2, oder in die 6. Gangstufe geschaltet werden. Selbstverständlich kann auch in die 5. Gangstufe geschaltet werden, falls dies nicht eine zu hohe Getriebedrehzahl bedeutet.

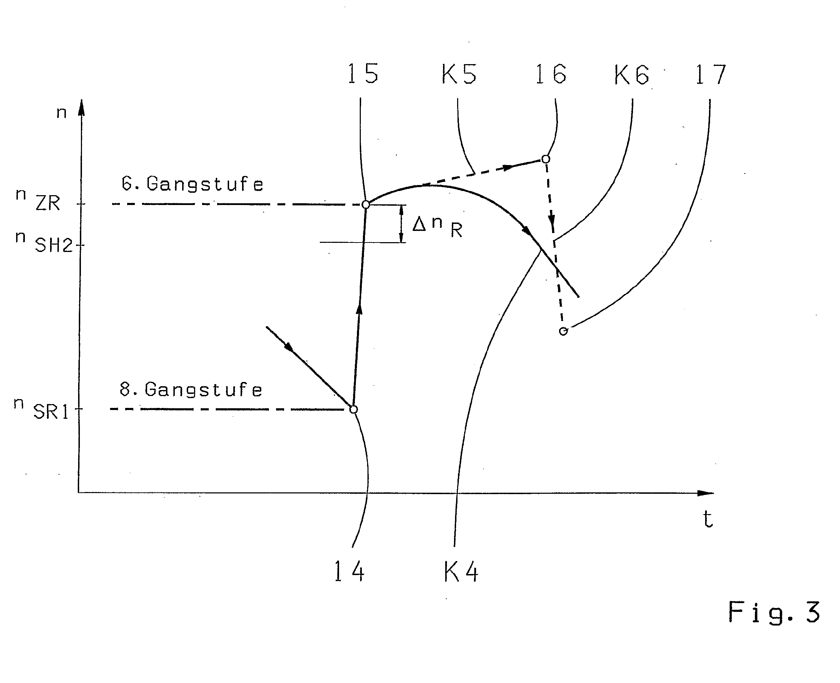

In Fig. 3 ist analog zu Fig. 2 die Situation dargestellt, wenn von einer hohen Gangstufe in eine niedrige Gangstufe zurückgeschaltet wird; in diesem Beispiel von der 8. Gangstufe in die 6. Gangstufe.

Erreicht die Getriebedrehzahl die erste Schaltdrehzahl n_{SR1}, siehe Punkt 14 in Fig. 3, so wird von einer hohen Gangstufe in eine niedrige Gangstufe zurückgeschaltet (siehe Punkt 15 in Fig. 3 zur Rückschaltung von der 8. Gangstufe in die 6. Gangstufe). Die im Punkt 15 erreichte Getriebezieldrehzahl n_{ZR} nach dem Rückschalten kann oberhalb der zweiten Getriebeschaltdrehzahl n_{SH2} liegen.

Ein erneutes sofortiges Hochschalten nach der Rückschaltung wird vorteilhaft verhindert, wenn ein Zähler gestartet wird. In Abhängigkeit von der Getriebedrehzahldifferenz Δn_{R} zwischen der Getriebezieldrehzahl n_{ZR} und der zweiten Getriebeschaltdrehzahl n_{SH2} wird ein Startzählerwert gesetzt. Weist die Getriebedrehzahldifferenz Δn_{R} einen relativ niedrigen Wert auf, so dass die Zieldrehzahl n_{ZR} nur geringfügig oberhalb der zweiten Getriebeschaltdrehzahl n_{SH2} liegt, so wird ein relativ hoher Startzählerwert gesetzt. Damit dauert es relativ lange, bis der Zählerwert des Zählers den Wert Null erreicht hat, so dass ein Schalten in eine höhere Gangstufe vorerst nicht erfolgt.

In Abhängigkeit vom Verlauf der Drehzahlkurve nach dem Rückschalten wird festgesetzt, ob der Zählerwert dekrementiert oder inkrementiert wird. Der Zählerwert nimmt bei einer unzureichenden Verzögerung ab. In diesem Fall steigt die Drehzahl z.B. gemäß Kurve K5 (siehe Fig. 3) bis zu einem Punkt 16. Zu diesem Zeitpunkt kann der Zählerwert auf Null dekrementiert worden sein, so dass ein Hochschalten in eine höhere Gangstufe erfolgt. Dies ist durch Kurve K6 und Punkt 17 in Fig. 3 veranschaulicht. Bei ausreichender Verzögerung und damit sinkender Drehzahl, siehe Kurve K4 in Fig. 3, besteht keine Veranlassung, in eine höhere Gangstufe zu schalten, so dass der Zählerwert nach einer ersten Dekrementierungsphase während des Drehzahlanstiegs ab Punkt 15 anschließend inkrementiert wird.

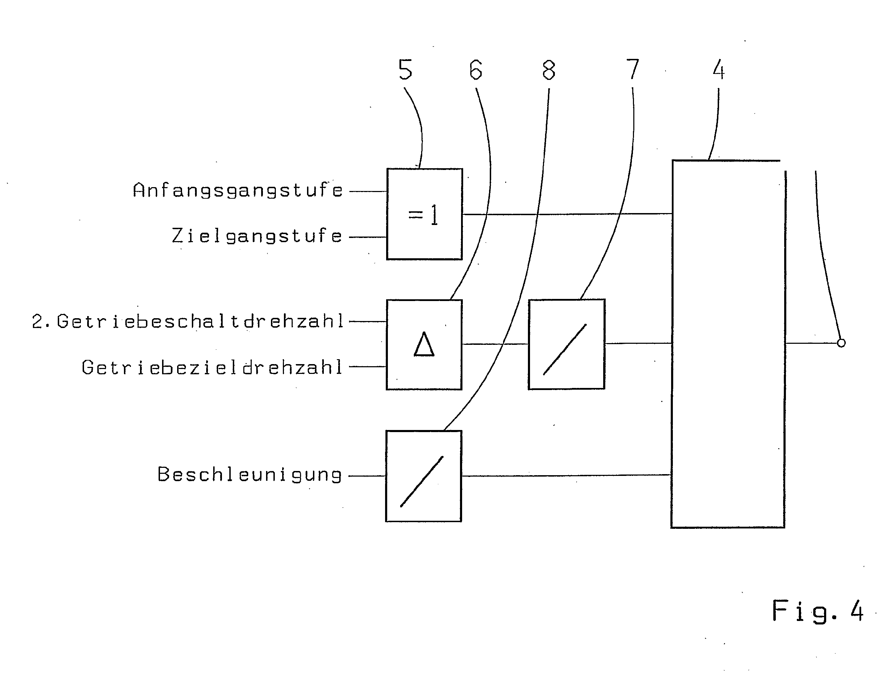

Damit das Verfahren wie vorstehend beschrieben durchgeführt werden kann, ist ein Zähler 4 erforderlich, an weichen Signale zugeleitet werden (siehe Fig. 4). Wird das Signal einer Anfangsgangstufe und einer Zielgangstufe einem Komparatorglied 5 zugeführt, und besteht ein Unterschied zwischen der Anfangsgangstufe und der Zielgangsstufe, so wird damit festgestellt, dass eine Schaltung erfolgte. Daraufhin initialisiert das Komparatorglied 5 den Zähler 4. Ferner wird mittels eines Differenzgliedes 6 die Differenz aus der zweiten Getriebeschaltdrehzahl und der Getriebezieldrehzahl ermittelt. Die somit bekannte Getriebedrehzahldifferenz wird einer Startzählerwertkennlinie 7 zugeführt, mit welcher ein Startzählerwert ermittelt wird. Dieser Startzählerwert wird an den Zähler 4 weitergegeben.

Außerdem wird die Ist-Beschleunigung des Fahrzeuges bzw. wie eingangs erwähnt bevorzugt die Beschleunigung der Getriebeeingangswellendrehzahl beobachtet. Der Betrag der Ist-Beschleunigung wird einer Zählerwertkennlinie 8 zugeführt, mit welcher ein Zählerwert festgelegt wird, mit dem inkrementiert oder dekrementiert wird. Dieses aktuelle Zählerwertinkrement wird dem Zähler 4 zugeführt. Am Ausgang 9 des Zählers 4 wird dann jeweils der aktuelle Zählerwert ausgegeben, welcher der elektronischen Steuerungseinheit 3 zugeführt wird. Erreicht der aktuelle Zählerwert den Wert Null, wird ein Schalten des Getriebes veranlasst.

Wie eingangs bereits erwähnt wurde, ist bevorzugt für jede der beiden Betriebsarten Hochschalten und Rückschalten des Getriebes jeweils ein Zähler 4 vorhanden, so dass die für einen Hochschaltvorgang bzw, einen Rückschaltvorgang notwenigen Berechnungen parallel zueinander durchgeführt werden können. Dadurch wird eine schnelle Reaktion des Verfahrens ermöglicht und die Schaltzeiten reduziert.

Durch das vorstehend beschriebene Verfahren kann ein Pendelschalten zumindest hinsichtlich seiner Auftretenshäufigkeit reduziert werden. Zusätzlich lassen sich Rückschaltungen wegen eines sogenannten Turbolochs reduzieren, Schaltungen aufgrund kurzzeitiger Topographieänderungen reduzieren sowie Schaltungen vermeiden, welche bei einem verrauschten Beschleunigungssignal auftreten würden. Somit erfüllt das Verfahren auch die Funktion eines Tiefpassfilters.

### Bezugszeichen

- 1: Antriebsmotor
- 2: Automatisches Getriebe mit Kupplungen
- 3: Elektronische Steuerungseinheit
- 4: Zähler
- 5: Komparatorglied
- 6: Differenzglied
- 7: Startzählerwertkennlinie
- 8: Zählerwertkennlinie
- 9: Zählerausgang
- 10: Schaltpunkt bei erster Getriebeschaltdrehzahl zum Hochschalten
- 11: Schaltpunkt auf Getriebezieldrehzahl nach dem Hochschalten
- 12: Schaltpunkt hohe Gangstufe bei Zählerwert Null
- 13: Schaltpunkt bei niedrigerer Gangstufe
- 14: Schaltpunkt bei erster Getriebeschaltdrehzahl zum Rückschalten
- 15: Schaltpunkt auf Getriebezieldrehzahl nach dem Rückschalten
- 16: Schaltpunkt niedrige Gangstufe bei Zählerwert Null
- 17: Schaltpunkt bei höherer Gangstufe

- n: Getriebedrehzahl
- n_{SH1}: erste Getriebeschaltdrehzahl für Hochschalten
- n_{SR2}: zweite Getriebeschaltdrehzahl für Rückschalten
- n_{ZH}: Getriebezieldrehzahl für Hochschalten
- n_{SR1}: erste Getriebeschaltdrehzahl für Rückschalten
- n_{SH2}: zweite Getriebeschaltdrehzahl für Hochschalten
- n_{ZR}: Getriebezieldrehzahl für Rückschalten
- t: Zeit

## Patentansprüche

1. Verfahren zur Steuerung eines automatischen Getriebes (2) eines Fahrzeuges mit Kupplungen, die durch eine elektronische Steuereinheit (3) gesteuert werden, wobei das Verfahren die Schritte aufweist:
- Erfassen einer Getriebedrehzahl bei einer Anfangsgangstufe,
- Schalten von der Anfangsgangstufe in eine Zielgangstufe, falls eine erste Getriebeschaltdrehzahl erreicht ist und
- Erfassen einer Getriebezieldrehzahl der Zielgangstufe,
- Ermitteln eines Betrages einer Getriebedrehzahldifferenz aus Getriebezieldrehzahl und einer zweiten Getriebeschaltdrehzahl, welche einen Betrag zwischen der ersten Getriebeschaltdrehzahl und der Getriebezieldrehzahl aufweist, **dadurch gekennzeichnet, dass** das Verfahren die weiteren Schritte aufweist:
- Bestimmen eines Startzählerwertes eines Zählers (4) in Abhängigkeit vom Betrag der Getriebedrehzahldifferenz,
- Zähler (4) vom Startzählerwert beginnend in Abhängigkeit von der Zeit zählen lassen und
- Schalten von der Zielgangstufe in Richtung zur Anfangsgangstufe, wenn der Zählerwert des Zählers (4) den Wert Null erreicht hat.

2. Verfahren nach Anspruch 1, **dadurch gekennzeichnet, dass** die Zielgangstufe eine höhere Gangstufe als die Anfangsgangstute ist, und die zweite Getriebeschaltdrehzahl eine Getriebeschaltdrehzahl für ein Rückschalten in eine niedrigere Gangstufe in Richtung zur Anfangsgangstute ist.

3. Verfahren nach Anspruch 2, **dadurch gekennzeichnet, dass** der Zählerwert unterhalb des Startzählerwertes zunimmt, wenn das Fahrzeug so beschleunigt wird, dass ein vorbestimmter Beschleunigungsbetrag überschritten wird.

4. Verfahren nach Anspruch 2, **dadurch gekennzeichnet, dass** der Zählerwert vom Startzählerwert beginnend abnimmt, wenn das Fahrzeug so beschleunigt wird, dass ein vorbestimmter Beschleunigungsbetrag unterschritten wird.

5. Verfahren nach den Ansprüchen 2 bis 4, **dadurch gekennzeichnet, dass** der Startzählerwert auf einen relativ hohen Startzählerwert gesetzt wird, wenn der Betrag der Getriebedrehzahldifferenz einen relativ niedrigen Wert aufweist.

6. Verfahren nach den Ansprüchen 2 bis 4, dadurch **gekenn** - **zeichnet,** dass der Startzählerwert auf einen relativ niedrigen Startzählerwert gesetzt wird, wenn der Betrag der Getriebedrehzahldifferenz einen relativ hohen Wert aufweist.

7. Verfahren nach Anspruch 1, **dadurch gekennzeichnet, dass** die Zielgangstufe eine niedrigere Gangstufe als die Anfangsgangstufe ist, und die zweite Getriebeschaltdrehzahl eine Getriebeschaltdrehzahl für ein Hochschalten in eine höhere Gangstufe in Richtung zur Anfangsgangstufe ist.

8. Verfahren nach Anspruch 7, **dadurch gekennzeichnet, dass** der Zählerwert unterhalb des Startzählerwertes zunimmt, wenn das Fahrzeug so verzögert wird, dass ein vorbestimmter Verzögerungsbetrag überschritten wird.

9. Verfahren nach Anspruch 7, **dadurch gekennzeichnet, dass** der Zählerwert vom Startzählerwert beginnend abnimmt, wenn das Fahrzeug so verzögert wird, dass ein vorbestimmter Verzögerungsbetrag unterschritten wird.

10. Verfahren nach den Ansprüchen 7 bis 9, **dadurch gekennzeichnet, dass** der Startzählerwert auf einen relativ hohen Startzählerwert gesetzt wird, wenn der Betrag der Getriebedrehzahldifferenz einen relativ niedrigen Wert aufweist.

11. Verfahren nach den Ansprüchen 7 bis 10, **dadurch gekennzeichnet, dass** der Startzählerwert auf einen relativ niedrigen Startzählerwert gesetzt wird, wenn der Betrag der Getriebedrehzahldifferenz einen relativ hohen Wert aufweist.

12. Verfahren nach einem der vorherigen Ansprüche, **dadurch gekennzeichnet, dass** zur Bestimmung desjenigen Zählerwertinkrements, mit dem der Startzählerwert dekrementiert oder inkrementiert wird, eine Zählerwertkennlinie (8) oder eine Zählerwerttabelle genutzt wird.

13. Verfahren nach Anspruch 12, **dadurch gekennzeichnet, dass** das Zählerwertinkrement zum Dekrementieren bzw. Inkrementieren in Abhängigkeit von der Fahrzeugbeschleunigung oder in Abhängigkeit von der Beschleunigung der Getriebeeingangswellendrehzahl bestimmt wird.

14. Verfahren nach einem der vorherigen Ansprüche, **dadurch gekennzeichnet, dass** die Schaltdrehzahlen für eine mögliche Hochschaltung bzw. eine mögliche Rückschaltung ständig und weitgehend parallel zueinander bestimmt werden.

15. Verfahren nach einem der vorherigen Ansprüche, dadurch **ge- kennzeichnet,** dass für jede der beiden Betriebsarten (Hochschalten oder Rückschalten) ein separater Zähler (4) zum Dekrementieren bzw. Inkrementieren deren Zählerstände genutzt wird.

16. Verfahren nach einem der vorherigen Ansprüche, dadurch **ge- kennzeichnet,** dass die Auslösung eines konkreten Hoch- oder Rückschaltvorgangs erst dann erfolgt, wenn der zur aktuellen Betriebsart gehörende Zähler (4) den Wert Null erreicht hat.

## Claims

1. Method for controlling an automatic transmission (2) of a vehicle having clutches which are controlled by an electronic control unit (3), wherein the method comprises the following steps:
- detecting a transmission rotational speed at a starting gearspeed,
- shifting from the starting gearspeed into a target gear speed if a first transmission shifting rotational speed is reached, and
- detecting a transmission target rotational speed of the target gearspeed,
- determining an absolute value of a transmission rotational speed difference from the transmission target rotational speed and a second transmission shifting rotational speed, which has an absolute value between the first transmission shifting rotational speed and the transmission target rotational speed, **characterized in that** the method comprises the further steps:
- determining a starting counter value of a counter (4) as a function of the absolute value of the transmission rotational speed difference,
- allowing the counter (4) to count starting from the starting counter value as a function of the time, and
- shifting from the target gearspeed in the direction of the starting gearspeed if the counter value of the counter (4) has reached the value zero.

2. Method according to Claim 1, **characterized in that** the target gearspeed is a higher gearspeed than the starting gearspeed and the second transmission shifting rotational speed is a transmission shifting rotational speed for shifting down into a lower gearspeed with respect to the direction of the starting gearspeed.

3. Method according to Claim 2, **characterized in that** the counter value increases below the starting counter value if the vehicle is accelerated in such a way that a predetermined absolute acceleration value is exceeded.

4. Method according to Claim 2, **characterized in that** the counter value decreases starting from the starting counter value if the vehicle is accelerated in such a way that a predetermined absolute acceleration value is undershot.

5. Method according to Claims 2 to 4, **characterized in that** the starting counter value is set to a relatively high starting counter value if the absolute value of the transmission rotational speed difference has a relatively low value.

6. Method according to Claims 2 to 4, **characterized in that** the starting counter value is set to a relatively low starting counter value if the absolute value of the transmission rotational speed difference has a relatively high value.

7. Method according to Claim 1, **characterized in that** the target gearspeed is a lower gearspeed than the starting gearspeed, and the second transmission shifting rotational speed is a transmission shifting rotational speed for shifting up into a higher gearspeed with respect to the direction of the starting gearspeed.

8. Method according to Claim 7, **characterized in that** the counter value increases below the starting counter value if the vehicle is decelerated in such a way that a predetermined absolute deceleration value is exceeded.

9. Method according to Claim 7, **characterized in that** the counter value decreases starting from the starting counter value if the vehicle is decelerated in such a way that a predetermined absolute deceleration value is undershot.

10. Method according to Claims 7 to 9, **characterized in that** the starting counter value is set to a relatively high starting counter value if the absolute value of the transmission rotational speed difference has a relatively low value.

11. Method according to Claims 7 to 10, **characterized in that** the starting counter value is set to a relatively low starting counter value if the absolute value of the transmission rotational speed difference has a relatively high value.

12. Method according to one of the preceding claims, **characterized in that** a counter value characteristic curve (8) or a counter value table is used to determine that counter value increment with which the starting counter value is decremented or incremented.

13. Method according to Claim 12, **characterized in that** the counter value increment for decrementing or incrementing is determined as a function of the vehicle acceleration or as a function of the acceleration of the rotational speed of the transmission input shaft.

14. Method according to one of the preceding claims, **characterized in that** the shifting rotational speeds for possible shifting up or possible shifting down are determined continuously and largely in parallel with one another.

15. Method according to one of the preceding claims, **characterized in that** a separate counter (4) for decrementing or incrementing the counter states of the two operating modes (shifting up and shifting down) is used for each of said modes.

16. Method according to one of the preceding claims, **characterized in that** the triggering of a specific shifting up process or shifting down process does not take place until the counter (4) which is associated with the current operating mode has reached the value zero.

## Revendications

1. Procédé pour commander une boîte de vitesses automatique (2) d'un véhicule avec des embrayages commandés par une unité de commande électronique (3), le procédé comportant les étapes suivantes :
- détection d'une vitesse de rotation de boîte de vitesses pour un rapport de départ ;
- changement de vitesse pour passer du rapport de départ dans un rapport cible, dès lors qu'une première vitesse de rotation de changement de vitesse de boîte de vitesses est atteinte ; et
- détection d'une vitesse de rotation cible de boîte de vitesses du rapport cible ;
- calcul de la valeur d'une différence de vitesse de rotation de boîte de vitesses à partir de la vitesse de rotation cible de boîte de vitesses et d'une deuxième vitesse de rotation de changement de vitesse de boîte de vitesses présentant une certaine valeur entre la première vitesse de rotation de changement de vitesse de boîte de vitesses et la vitesse de rotation cible de boîte de vitesses ;
**caractérisé en ce que** le procédé comporte les étapes supplémentaires suivantes :
- détermination d'une valeur de compteur de démarrage d'un compteur (4) en fonction de la valeur de la différence de vitesse de rotation de boîte de vitesses ;
- compte à rebours du compteur (4) à partir de la valeur de compteur de démarrage en fonction de la durée ; et
- changement de vitesse du rapport cible en direction du rapport de départ lorsque la valeur de compteur du compteur (4) a atteint la valeur nulle.

2. Procédé selon la revendication 1, **caractérisé en ce que** le rapport cible est un rapport plus élevé que le rapport de départ et que la deuxième vitesse de rotation de changement de vitesse de boîte de vitesses est une vitesse de rotation de changement de vitesse de boîte de vitesses correspondant à une rétrogradation dans un rapport inférieur en direction du rapport de départ.

3. Procédé selon la revendication 2, **caractérisé en ce que** la valeur de compteur augmente jusqu'à passer en dessous de la valeur de compteur de démarrage lorsque le véhicule accélère de telle sorte qu'une valeur d'accélération prédéfinie est dépassée.

4. Procédé selon la revendication 2, **caractérisé en ce que** la valeur de compteur diminue en partant de la valeur de compteur de démarrage lorsque le véhicule accélère de telle sorte que l'on passe en dessous d'une valeur d'accélération prédéfinie.

5. Procédé selon les revendications 2 à 4, **caractérisé en ce que** la valeur de compteur de démarrage est placée à une valeur de compteur de démarrage relativement élevée lorsque la valeur de la différence de vitesse de rotation de boîte de vitesses présente une valeur relativement moindre.

6. Procédé selon les revendications 2 à 4, **caractérisé en ce que** la valeur de compteur de démarrage est placée à une valeur de compteur de démarrage relativement moindre lorsque la valeur de la différence de vitesse de rotation de boîte de vitesses présente une valeur relativement élevée.

7. Procédé selon la revendication 1, **caractérisé en ce que** le rapport cible est un rapport inférieur au rapport de départ et que la deuxième vitesse de rotation de changement de vitesse de boîte de vitesses est une vitesse de rotation de changement de vitesse de boîte de vitesses permettant un changement de vitesse vers une vitesse supérieure permettant de passer dans un rapport plus élevé en direction du rapport de départ.

8. Procédé selon la revendication 7, **caractérisé en ce que** la valeur de compteur augmente pour passer en dessous de la valeur de compteur de démarrage lorsque le véhicule ralentit de telle sorte qu'une valeur de ralentissement prédéfinie est dépassée.

9. Procédé selon la revendication 7, **caractérisé en ce que** la valeur de compteur diminue en partant de la valeur de compteur de démarrage lorsque le véhicule ralentit de telle sorte que l'on passe en dessous d'une valeur de ralentissement prédéfinie.

10. Procédé selon les revendications 7 à 9, **caractérisé en ce que** la valeur de compteur de démarrage est placée à une valeur de compteur de démarrage relativement élevée lorsque la valeur de la différence de vitesse de rotation de boîte de vitesses présente une valeur relativement moindre.

11. Procédé selon les revendications 7 à 10, **caractérisé en ce que** la valeur de compteur de démarrage est placée à une valeur de compteur de démarrage relativement moindre lorsque la valeur de la différence de vitesse de rotation de boîte de vitesses présente une valeur relativement élevée.

12. Procédé selon l'une quelconque des revendications précédentes, **caractérisé en ce que** pour déterminer l'incrément de valeur de compteur utilisé pour décrémenter ou incrémenter la valeur de compteur de démarrage, on utilise une courbe caractéristique de valeurs de compteur (8) ou un tableau de valeurs de compteur.

13. Procédé selon la revendication 12, **caractérisé en ce que** l'incrément de valeur de compteur est défini pour effectuer une décrémentation et/ou une incrémentation en fonction de l'accélération du véhicule ou en fonction de l'accélération de la vitesse de rotation d'arbre d'entrée de boîte de vitesses.

14. Procédé selon l'une quelconque des revendications précédentes, **caractérisé en ce que** les vitesses de rotation de changement de vitesse pour un éventuel changement de vitesse vers une vitesse supérieure et/ou une éventuelle rétrogradation sont définies en permanence et largement en parallèle l'une de l'autre.

15. Procédé selon l'une quelconque des revendications précédentes, **caractérisé en ce que** pour chacun des deux modes de fonctionnement (changement de vitesse vers une vitesse supérieure ou rétrogradation), un compteur (4) séparé est utilisé pour effectuer une décrémentation et/ou une incrémentation des états du compteur.

16. Procédé selon l'une quelconque des revendications précédentes, **caractérisé en ce que** le déclenchement d'un processus de passage à une vitesse supérieure ou de rétrogradation concret se produit dès que le compteur (4) associé au mode de fonctionnement actuel a atteint la valeur nulle.
